# NEUE EUROPÄISCHE PATENTSCHRIFT

(11) **EP 0 319 867 B2**
(45) Veröffentlichungstag und Bekanntmachung des Hinweises auf die Entscheidung über den Einspruch: **13.03.1996**
(45) Hinweis auf die Patenterteilung: 27.01.1993
(21) Anmeldenummer: 88120200.6
(22) Anmeldetag: 03.12.1988
(51) Int. Cl.: C08B 11/10, C08B 11/193

(54) **Verfahren zur Herstellung von Sulfoethylcellulose mit hervorragender Lösungsqualität**
Method for the preparation of sulfoethyl cellulose with excellent solution characteristics
Procédé pour la préparation de cellulose sulfoéthylée à solubilité excellente

(30) Priorität: 11.12.1987 DE 3742104
(43) Veröffentlichungstag der Anmeldung: 14.06.1989
(73) Patentinhaber: Wolff Walsrode Aktiengesellschaft, D-29655 Walsrode (DE)
(72) Erfinder: Herzog, Dieter, Dr., D-3030 Walsrode (DE); Balser, Klaus, Dr., D-3030 Walsrode (DE); Szablikowski, Klaus, Dr., D-3030 Walsrode (DE)
(74) Vertreter: Zobel, Manfred, Dr.

(56) Entgegenhaltungen:
- EP-A- 0 319 865
- GB-A- 1 072 021
- US-A- 2 278 612
- US-A- 2 580 352
- US-A- 2 811 519
- US-A- 3 761 465
- ABSTRACT BULLETIN OF THE INSTITUTE OF PAPER CHEMISTRY, Band 35, Nr. 2, November 1964, Seiten 227-228, Zusammenfassung Nr. 909, Appleton, Wisconsin, US; E.A. PLISKO et al.: "Water-soluble sulfomethyl and sulfoethyl ethers of cellulose"
- ULLMANN's ENCYCLOPEDIA OF INDUSTRIAL CHEMISTRY, 5th Edition, Volume A5, page 463, VCH-Verlag, Weinheim

## Beschreibung

Die Erfindung betrifft ein Verfahren zu Herstellung einer Sulfoethylcellulose (SEC) mit hervorragender Lösungsqualität.

SEC ist ein wasserlöslicher, ionischer Celluloseether mit interessanten Eigenschaften. Verwiesen sei in diesem Zusammenhang auf das Kapitel "Celluloseether" in Ullmann's Encyclopädie der technischen Chemie, Bd. 9, Seite 192-212 (Verlag Chemie, Weinheim, 1975).

Ein wichtiges Qualitätskriterium bei der Herstellung von wasserlöslichen Celluloseethern ist die völlige Wasserlöslichkeit der erhaltenen Produkte. D.h., daß beim Lösen in Wasser keine Fasern oder Gelkörper, die zu Trübungen der wäßrigen Lösungen führen, zurückbleiben dürfen. Diese Trübungen lassen sich durch Messungen der Transmission von wäßrigen Cellether-Lösungen ermitteln.

Gemäß US-A 2 132 181 wird SEC im Kneter-Verfahren hergestellt, was erfahrungsgemäß Produkt mit höherem Anteil an Fasern und Gelkörpern zur Folge hat. Des weiteren wird mit extremen Natronlauge-Überschüssen gearbeitet, so daß die Herstellung dieser Produkte unwirtschaftlich ist. Gemäß US-A-2 580 352 werden Cellulosesulfoethylether durch Umsetzung einer alkalischen Polysaccharidsuspension in einem inerten organischen Lösungsmittel hergestellt.

T. Timell (Svensk Papperstidning 51, Nr. 11, 254-258, 1948) beschreibt die Herstellung von SEC mit DS-Werten (= Durchschnittssubstitutionwerten) von max. 0,42 durch Umsetzung von Alkalicellulose mit halogenethansulfonsauren Natriumsalzen. In der Veröffentlichung wird angegeben, daß die SEC ab DS-Werten von 0,3 bis 0,4 wasserlöslich ist. Auf die Qualität der Lösung wird hierbei aber überhaupt nicht eingegangen.

Gemäß der US-A-2 811 519 können Sulfoethyl- und Carboxymethylgruppen-haltigeCellulosen hergestellt werden durch Umsetzung von Cellulose in Gegenwart von Alkali mit entsprechenden Substanzen.

E.A. Plisko et. al. (Zh. Prikl. Khim. 36, 1.994-1.996, 1963) beschreiben die Herstellung von SEC durch Reaktion von Alkalicellulose mit 2-chlorethansulfonsaurem Natriumsalz. Das dort verwendete Slurry-Verfahren führt bei Temperaturen von 80 bis 130°C nur zu niedrigviskosen Produkten (max. Viskosität 1 %iger dest.-Wasser-Lösung: 117 mPa·s).

E.A. Plisko et. al. (Zh. Prikl. Khim. 50, Nr. 9, 2.003-2.005, 1967) beschreiben die Herstellung von SEC aus Alkalicellulose mit chlorethansulfonsaurem Natrium. Die erhaltenen Produkte besitzen einen max. DS von 0,42 und eine Löslichkeit von max. 99,7 %. Auch diese Produkte können daher keine vollständige Freiheit von Fasern und Gelkörpern besitzen.

In SU 757 540 wird ein zweistufiges Verfahren zur Herstellung von SEC beschrieben, in dem in der ersten Stufe durch Umsetzung von Cellulose mit wäßriger Natronlauge Alkalicellulose hergestellt wird, die anschließend abgepreßt und aufgelockert werden muß. In den Beispielen wird ein Preßfaktor der Alkalicellulose, d.h. das Gewichtsverhältnis von feuchter Alkalicellulose zur eingesetzten trockenen Cellulose, von 3 angegeben: erfahrungsgemäß ist dazu ein aus der Viskoseindustrie bekanntes Hochdruckwerkzeug (z.B. Tauchpresse) mit Preßdrucken von bis zu 300 bar erforderlich.

In der zweiten Stufe wird die abgepreßte, aufgelockerte Alkalicellulose mit einer 2,5 bis 16 %igen Lösung von vinylsulfonsaurem Natrium in einem sekundären oder tertiären aliphatischen Alkohol bei einem Flottenverhältnis von 1:30 umgesetzt, wobei das Molverhältnis vinylsulfonsaures Natrium:Cellulose 1:1 bis 6:1 beträgt. Die Reaktionszeit bei 60 bis 90°C liegt bei 3 bis 7 Stunden. Das Produkt wird mit 70 bis 75 %igem Alkohol gewaschen und getrocknet.

Nach den Beispielen werden so Ausbeuten (bezogen auf das eingesetzte vinylsulfonsaure Natrium) erhalten, die zwischen 8,7 und 43 % liegen.

Die nicht näher definierte "Wasserlöslichkeit" der in den Beispielen hergestellten Produkte liegt zwischen 99 und 100 %. Der Nachteil dieses Verfahrens besteht zum einen in der separat durchgeführten Alkalisierung mit dem technisch sehr aufwendigen Abpreßvorgang. Zum anderen können infolge des bei dieser Form der Alkalisierung unvermeidbaren alkalisch oxidativen Abbaus der Cellulose (als Vorreife beim Viskoseverfahren bekannt) nur niederviskose Veretherungsprodukte erhalten werden.

Aus US-A-4 519 923 ist die Verwendung von SEC in Bohrspülungssystemen bekannt. Die verwendete SEC wird jedoch nur über die Viskosität und den Substitutionsgrad charakterisiert. Über das Verfahren zur Herstellung wird keinerlei Angabe gemacht, desgleichen über die Lösungsqualität.

JP 8 218 701 beschreibt die Herstellung von SEC durch Umsetzung von Alkalicellulose mit 2-chlorethansulfonsaurem Natrium unter stufenweiser Zugabe in einem inerten Slurrymedium. Dabei werden jedoch Produkte erhalten, die einen geringen Substitutionsgrad (DS = 0,33) und eine Transmission von nur 80 % aufweisen, also einen hohen Anteil an nicht gelösten Substanzen besitzen.

Der Erfindung lag die Aufgabe zugrunde, ein Verfahren zur wirtschaftlichen Herstellung von sulfoethyliertem Celluloseether (SEC) mit hervorragenden Lösungsqualitäten in allen, auch höchsten, Viskositätsbereichen bereitzustellen.

Gegenstand der Erfindung ist die Herstellung einer Sulfoethylcellulose (SEC) mit einer durchschnittlichen Substitution (DS) von 0.5 bis 1,4, insbesondere von 0,5 bis 1,2, einer Viskosität von 15 bis 60 000 mPa·s, insbesondere von 100 bis 50.000 mPa·s (gemessen in 2 gew.-%iger wäßriger Lösung bei einem Schergefälle von 2,5 sec⁻¹ bei 20°C) und einer Transmission (gemessen an einer 2 gew.-%igen wäßrigen Lösung in einer Küvette mit einer optischen Weglänge von 10 mm mit Licht der Wellenlänge 550 nm) von mehr als 95, insbesondere mehr als 96 %.

Dabei wird die unsubstituierte SEC nach Ende der Veretherungszeit neutralisiert, anschließend isoliert und dann nach erneuter Alkalisierung durch Zugabe eines oder mehrerer weiterer Alkylierungsmittel, wie z.B. Chloressigsäure, Propylenoxid, Ethylenoxid, Methylchlorid, Ethylchlorid usw. in einer zweiten Veretherungsstufe zum gewünschten Ether umgesetzt. Dabei bleibt die hohe Qualität in bezug auf die Transparenz erhalten. Alternativ kann die Mischveretherung auch ohne eine Reinigung und Neutralisation der in der ersten Stufe hergestellten SEC erfolgen. Dabei kann noch vorhandene Natronlauge vorteilhaft für die zweite Veretherungsstufe eingesetzt werden. Das gilt besonders bei der Verwendung eines alkaliverbrauchenden Zweitsubstituenten, wie z.B. Methylchlorid, Ethylchlorid oder Chloressigsäure. Bei Einsatz stöchiometrischer Mengen dieser Alkylierungsreagenzien fällt die Neutralisation weg.

Gegenstand der Erfindung ist ein Verfahren zur Herstellung von Sulfoethylcellulose durch Umsetzung von Cellulose mit Vinylsulfonsäure bzw. deren Na-Salz als Alkylierungsmittel, dadurch gekennzeichnet, daß
1. das Alkylierungsmittel zugefügt wird zu einem in Alkohol suspendierten, gemahlenen Zellstoff bei einem pH-Wert von vorzugsweise von 4 bis 9
2. gegebenenfalls anschließend das Alkylierungsmittel und der Zellstoff miteinander vermischt werden
3. die Mischung durch Alkalizugabe, insbesondere von Natronlauge, alkalisiert wird insbesondere auf einen pH von 11 bis 14, insbesondere von 13 bis 14
4. die Temperatur anschließend insbesondere auf 55 bis 100°C erhöht wird für die Veretherungsreaktion und gegebenenfalls
5. nach der Veretherung neutralisiert, filtriert und gewaschen wird.

In einer bevorzugten Ausführungsform beträgt das molare Verhältnis von Zellstoff zu Alkylierungsmittel 1 : 0,8 bis 1 : 2,8. In einer besonders bevorzugten Ausführungsform erfolgt die gesamte Herstellung nach dem Eintopfverfahren.

Bei dem erfindungsgemäß als Ausgangsstoff zu verwendenden Zellstoff handelt es sich vorzugsweise um Celluloselinters, insbesondere mit einem Gehalt an α-Cellulose von mehr als 98 %.

Die erfindungsgemäß erhaltenen Sulfoethylcellulosen zeichnen sich aus durch vollständige Wasserlöslichkeit, d.h. die Produkte besitzen nach dem weiter unten beschreibenen Meßverfahren einen löslichen Anteil >99,95 %.

Die erhaltenen Produkte besitzen so gute Eigenschaften, daß sie für alle Anwendungsgebiete einsetzbar sind. Auch in Einsatzbereichen, die extreme Qualitätsansprüche in bezug auf die Gelkörper- und Faserfreiheit stellen, wie z.B. bei Streich- und Spritzfarben oder kosmetischen Zubereitungen.

Die Herstellung der sulfoethylierten Cellulosederivate erfolgt vorzugsweise in einem Eintopfverfahren, d.h. die Alkalisierung-und die Veretherung erfolgen in ein und demselben Aggregat.

Eine bevorzugte Ausführungsform des Verfahrens wird im nachfolgenden beschrieben: Die Reaktion wird vorzugsweise in einem zylindrischen Reaktionsgefäß durchgeführt, das mit einem geeigneten Rühraggregat versehen ist, welches eine ausreichende Durchmischung der heterogenen Reaktionsmasse gewährleistet. Das Reaktionsgefäß ist vorzugsweise geschlossen, um eine Reaktionsführung unter Stickstoffatmosphäre zu gewährleisten. Eine ausreichende Möglichkeit zur Temperierung des Gefäßes ist vorzugsweise ebenfalls vorhanden.

Der gemahlene Zellstoff wird vorzugsweise in Isopropanol suspendiert und mit einer wäßrigen Lösung von vinylsulfonsaurem Natrium versetzt. Nach der Zugabe der wäßrigen Lösung des vinylsulfonsauren Natriums wird nach intensiver Durchmischung durch Zugabe von wäßriger Natronlauge zwischen 60 und 180 Minuten bei 0 bis 35°C alkalisiert. Anschließend wird durch Temperaturerhöhung auf 55 bis 100°C die Veretherung durchgeführt. Nach Ende der Veretherungszeit von 100 bis 240 Minuten wird durch Zugabe einer Säure die Natronlauge neutralisiert und das erhaltene Produkt abfiltriert. Die erhaltene SEC kann durch Waschen mit 70 %igem Methanol von den anhaftenden Salzen gereinigt werden.

### Beispiele

Die im folgenden angegebenen Teile sind Gewichtsteile.

Die Messung der Viskositäten erfolgt mit einem Rotationsviskosimeter Haake, Typ RV 100, System M 500, Meßeinrichtung MV, nach DIN 53 019, bei einer Schergeschwindigkeit D = 2,5 sec⁻¹, bei einer Temperatur von 20°C. Es wurden jeweils 2 gew.-%ige Lösungen in destilliertem Wasser vermessen.

Die Transmissionsmessungen erfolgten in einem Hitachi-Spektralphotometer, Modell 101, Hitachi Ltd. Tokio/Japan. Es wurde eine Glasküvette mit 10 mm optischer Weglänge verwendet. Die verwendete Wellenlänge betrug 550 nm. Es wurden jeweils 2 gew.-%ige Lösungen in destilliertem Wasser vermessen.

Zur Bestimmung der vollständigen Wasserlöslichkeit wird eine Menge des lufttrockenen, gereinigten Celluloseethers eingewogen, die 2.000 g absolut trockener Substanz entspricht, und in 198 ml destilliertem Wasser gelöst. Diese Lösung wird vollständig durch einen bei 120°C gewichtskonstant getrockneten, gewogenen Glasfiltertiegel G 2 abgesaugt. Anschließend wird der Filtertiegel fünfmal mit je 100 ml destilliertem Wasser gewaschen, um anhaftende gelöste Celluloseether zu entfernen. Der Glasfiltertiegel wird erneut bei 120°C gewichtskonstant getrocknet und gewogen. Aus den Differenzen der Wägungen wird der unlösliche Anteil bestimmt und daraus der prozentuale Anteil des löslichen Celluloseethers errechnet. Im Rahmen der Meßgenauigkeit definieren wir Celluloseether als vollständig löslich, die einen wasserlöslichen Anteil von mehr als 99,95 % aufweisen.

### Beispiel 1

In einem zylindrischen Reaktionsgefäß mit einem geeigneten Rühraggregat, welches in geeigneter Weise thermostatisierbar ist und in dem unter Stickstoff-Atmosphäre gearbeitet werden kann, werden 113,4 Teile Chemie-Zellstoff (Baumwoll-Linters) in 2.190 Teilen Isopropanol suspendiert. Dazu gibt man 261 Teile einer 48,8 gew.-%igen Lösung vinylsulfonsaures Natrium und durchmischt 15 Minuten lang gründlich. Dann werden 76,3 Teile Wasser und 67,2 Teile Natriumhydroxid zugegeben und 80 Minuten bei 25 bis 30°C alkalisiert. Anschließend wird innerhalb von 30 Minuten auf 75°C erwärmt und diese Temperatur 180 Minuten lang gehalten. Der Ansatz wird durch Zugabe einer äquimolaren Menge konzentrierter Essigsäure neutralisiert und das Produkt abfiltriert. Das Produkt wird fünfmal mit je 2.000 Teilen einer Mischung aus 7 Anteilen Methanol und 3 Anteilen Wasser gewaschen und an der Luft getrocknet. Die Produktdaten sind der Tabelle 2 zu entnehmen.

### Beispiel 2-5

Die Herstellung erfolgt wie in Beispiel 1, die Produktherstelldaten sind Tabelle 1 zu entnehmen.

### Beispiel 6, 8, 10 und 12

Die Herstellung erfolgt wie in Beispiel 1. Die Produktherstelldaten sind Tabelle 1 zu entnehmen.

### Vergleichsbeispiele 7, 9, 11 und 13

Die Herstellung erfolgt wie bei den Beispielen 6, 8, 10 und 12, wobei die Zugabe der vinylsulfonsauren Natriumsalz-Lösung nach Ende der 80-minütigen Alkalisierzeit erfolgt. Anschließend wird aufgeheizt und die Reaktion wie bei den vorab benannten Beispielen zu Ende geführt. Die Produktherstelldaten sind Tabelle 1 zu entnehmen.

Die Produktdaten sind Tabelle 2 zu entnehmen. Die in den erfindungsgemäßen Herstellverfahren erhaltenen Chemikalienausbeuten (bezogen auf den Einsatz an vinylsulfonsaurem Natrium) liegen bei 48 bis 56 %. Sie sind damit deutlich höher als die bisher in der Literatur beschriebenen Ausbeuten.

Die in den Vergleichsbeispielen (in Tabelle 1 und 2 mit "*" gekennzeichnet) erhaltenen Chemikalienausbeuten liegen bei 41,7 bis 43,4 % und sind damit deutlich geringer als die bei den zugehörigen erfindungsgemäßen Beispielen.

Die Faserfreiheit der Produkte, ausgedrückt durch die Transmission der 2 gew.-%igen wäßrigen Lösungen, ist für die erfindungsgemäßen Beispiele gut bis hervorragend. Die Transmissionswerte liegen für alle erfindungsgemäßen Beispiele bei über 95 %.

Bei den aufgeführten Vergleichsbeispielen liegen die Transmissionswerte dagegen bei 83 bis 94,9 %. Besonders die Vergleichsbeispiele mit einer Transmission von unter 90 % zeigen einen sehr hohen Faseranteil, der den üblichen Qualitätsansprüchen insbesondere für Kosmetika und Streich- und Spritzfarben nicht mehr genügen kann.

Eine weitere Erhöhung der Ausbeute ist möglich durch den Wiedereinsatz des verwendeten Slurry-Mediums. Ein Teil des vinylsulfonsauren Natriums, welches als Alkylierungsmittel dient, wird während der Reaktion nicht umgesetzt und liegt dann im Slurry-Medium gelöst zusammen mit den bei der Reaktion entstehenden Nebenprodukten und einem Teil der Natronlauge vor.

Durch Abtrennung des Slurry-Mediums vom festen Reaktionsprodukt vor der Neutralisation ist es möglich, das Slurry-Medium mit dem darin noch enthaltenen Alkylierungsmittel erneut zu verwenden.

In diesem Slurry-Medium wird der Zellstoff für die nächste Reaktion suspendiert und mit der notwendigen Menge an vinylsulfonsaurer Natriumsalz-Lösung und Isopropanol versetzt. Die Menge an vinylsulfonsaurem Natrium ist jetzt geringer als es bei Verwendung eines frischen Slurry-Mediums wäre. Anschließend wird durch Zugabe von Natronlauge alkalisiert und dann die Reaktion, wie bereits beschrieben, durchgeführt.

Die in der Reaktion eingesetzte Natronlauge verbleibt größtenteils im abgetrennten, festen Produkt und muß in der ersten Reinigungsstufe dieses Produktes durch Zugabe einer entsprechenden Menge an Säure (vorzugsweise Essigsäure oder Ameisensäure) neutralisiert werden. Die nach der Abtrennung des festen Produktes im Slurry-Medium verbleibenden Menge an Natronlauge ist gering und stört nicht bei der erneuten Umsetzung. Diese Wiederverwendung des Slurry-Mediums kann mehrfach wiederholt werden. In allen Beispielen wird ein wie im Beispiel 1 beschriebenes Aggregat verwendet.

### Beispiel 14a

84 Teile Fichtensulfit-Zellstoff werden in 2.200 Teilen Isopropanol suspendiert. Dazu gibt man 273 Teile einer 30 gew.-%igen vinylsulfonsauren Natriumsalz-Lösung und durchmischt gründlich. Nach 15 Minuten werden 5 Teile Wasser und 50,3 Teile Natriumhydroxid zugegeben und es wird 80 Minuten bei 25 bis 30°C alkalisiert. Dabei wird die Reaktionsmischung weiterhin gut gerührt. Anschließend wird innerhalb von 60 Minuten auf 75°C erwärmt und diese Temperatur 120 Minuten lang gehalten. Danach wird das Produkt abfiltriert und das Filtrat als Slurry-Medium für die folgende Reaktion, Beispiel 14b, verwendet. Das Produkt wird in 1.000 Teilen Methanol suspendiert und mit der äquimolaren Menge Essigsäure neutralisiert. Anschließend wird fünfmal mit je 2.000 Teilen einer Mischung aus 7 Anteilen Methanol und 3 Anteilen Wasser gewaschen und das Produkt an der Luft getrocknet. Die Produktdaten sind Tabelle 2 zu entnehmen.

### Beispiel 15a

84 Teile Baumwoll-Linters werden in 2.200 Teilen Isopropanol suspendiert. Dazu gibt man 273 Teile 30 %ige vinylsulfonsaure Natriumsalz-Lösung und durchmischt gründlich. Nach 15 Minuten werden 5 Teile Wasser und 50,3 Teile Natriumhydroxid zugegeben und es wird 80 Minuten bei 25 bis 30°C guter Durchmischung alkalisiert. Anschließend wird innerhalb von 40 Minuten auf 75°C erwärmt und diese Temperatur 120 Minuten gehalten. Danach wird das Produkt abfiltriert und das Filtrat als Slurry-Medium für das folgende Beispiel 15b verwendet. Das Produkt wird in 1.000 Teilen Methanol suspendiert und mit Essigsäure neutralisiert. Anschließend wird fünfmal mit je 2.000 Teilen einer Mischung aus 7 Anteilen Methanol und 3 Anteilen Wasser gewaschen und das Produkt an der Luft getrocknet. Die Produktdaten sind Tabelle 2 zu entnehmen.

### Beispiel 15b

Das aus beispiel 15a gewonnene Slurry-Medium (2.040 Teile) enthält noch 2,7 Teile Natriumhydroxid sowie 52 Teile Wasser. Es werden 280 Teile Isopropanol sowie 140 Teile 46,2 %ige vinylsulfonsaure Natriumsalz-Lösung zugegeben. In dieser Mischung werden 84 Teile Baumwoll-Linters suspendiert und 15 Minuten lang durchmischt. Anschließend werden 47,3 Teile Natriumhydroxid zugegeben und es wird 80 Minuten bei 25 bis 30°C alkalisiert. Danach wird innerhalb von 40 Minuten auf 75°C erwärmt und diese Temperatur 120 Minuten gehalten. Das Produkt wird abfiltriert, in 1.000 Teilen Methanol suspendiert und mit äquimolaren Mengen Essigsäure neutralisiert. Anschließend wird fünfmal mit je 2.000 Teilen einer Mischung aus 7 Anteilen Methanol und 3 Anteilen Wasser gewaschen und das Produkt getrocknet. Die Produktdaten sind Tabelle 2 zu entnehmen.

### Beispiel 15c

Das aus Beispiel 15b gewonnene Slurry-Medium (2.030 Teile) enthält noch 4 Teile Natriumhydroxid sowie 54 Teile Wasser. Es werden 290 Teile Isopropanol sowie 140 Teile 46,2 %ige vinylsulfonsaure Natriumsalz-Lösung zugegeben. In dieser Mischung werden 84 Teile Baumwoll-Linters suspendiert und 15 Minuten lang durchmischt. Anschließend werden 47 Teile Natriumhydroxid zugegeben und es wird 80 Minuten bei 25 bis 30°C gerührt. Danach wird innerhalb von 40 Minuten auf 75°C erwärmt und diese Temperatur 120 Minuten gehalten. Das Produkt wird abfiltriert, in 1.000 Teilen Methanol suspendiert und mit äquimolaren Mengen Essigsäure neutralisiert Anschließend wird fünfmal mit je 2.000 Teilen einer Mischung aus 7 Anteilen Methanol und 3 Anteilen Wasser gewaschen und das Produkt getrocknet. Die Produktdaten sind Tabelle 2 zu entnehmen.

Durch die Wiederverwendung des Slurry-Mediums kann die Chemikalienausbeute, bezogen auf vinylsulfonsaures Natrium, auf über 70 % gesteigert werden. Dabei erfolgt die Zugabe der wäßrigen vinylsulfonsauren Natriumsalz-Lösung erneut vor der Alkalisierung. Auch beim Einsatz des wiederverwendeten Slurry-Mediums werden Produkte von hoher Qualität (Transmission der wäßrigen 2 %igen Lösung >95 %) erhalten. Die Wirtschaftlichkeit ist aufgrund der höheren Chemikalienausbeute noch besser als bei dem Verfahren ohne Wiederverwendung des Slurry-Mediums.

### Beispiel 16 und 17

Die als Ausgangssubstanz für Beispiel 16a und 17a dienenden SEC werden wie Beispiel 1 hergestellt. Die genauen Produktherstelldaten sind Tabelle 1 zu entnehmen. Die Produktdaten sind Tabelle 2 zu entnehmen.

### Beispiel 16a

Herstellung einer Methylsulfoethylcellulose (MSEC) aus einer erfindungsgemäßen SEC.

173 Teile (Trockengehalt: 87,97 %) der in Beispiel 16 hergestellten SEC werden in einem Druckreaktor mit einem wandgängigen Flügelrührer vorgelegt und der Reaktor mit Stickstoff gespült. 29 Teile Natriumhydroxid werden in 29 Teilen Wasser gelöst und die Lösung unter ständigem Rühren auf die SEC aufgedüst. Die Mischung wird 80 Minuten bei 25°C gerührt. Man gibt 121 Teile Methylchlorid hinzu und erwärmt in 60 Minuten auf 75°C. Diese Temperatur wird unter ständigem Weiterrühren 230 Minuten gehalten. Anschließend wird in 25 Minuten auf 25°C gekühlt. Vor der Produktentnahme wird Vakuum angelegt, um flüchtige Substanzen zu entfernen. Danach wird belüftet. Das Produkt wird mit Methanol salzfrei gewaschen.

Die Produktdaten sind Tabelle 3 zu entnehmen.

### Beispiel 17a

Herstellung einer Hydroxyethylsulfoethylcellulose (HESEC) aus einer erfindungsgemäßen SEC.

172 Teile (Trockengehalt: 88,2 %) der in Beispiel 17 hergestellten SEC werden in 2.340 Teilen tert. Butanol in einem Druckreaktor mit Ankerrührwerk suspendiert. Der Reaktor wird mit Stickstoff gespült und man gibt 29 Teile Natriumhydroxid, gelöst in 152 Teilen Wasser, hinzu. Die Mischung wird 80 Minuten bei 25°C gerührt. Dann werden 106 Teile Ethylenoxid zugegeben und es wird in 60 Minuten auf 40°C erwärmt. Die Temperatur wird 300 Minuten gehalten. Es wird in 30 Minuten auf 25°C gekühlt und durch Zugabe von 44 Teilen Eisessig wird die Mischung neutralisiert. Das Produkt wird abgetrennt und mit Methanol salzfrei gewaschen. Die Produktdaten sind Tabelle 3 zu entnehmen.

**Tabelle 1**

| Herstellbedingungen | |
|---|---|
| Beispiele 1 bis 13, 16, 17 | |
| Erläuterungen Tabelle 1 | |
| VSSNa: | vinylsulfonsaures Natrium |
| NaOH: | Natriumhydroxid |
| H₂O: | Wasser |
| VSSNa-Zugabe: | Angabe des Zeitpunktes, zu dem die wäßrige vinylsulfonsaure Natriumsalz-Lösung dem Reaktionsgemisch zugegeben wurde: |
| vor der Alkal.: | vor der Zugabe des Natriumhydroxids |
| nach der Alkal.: | 80 Minuten nach der Zugabe des Natriumhydroxid |
| Linters: | Chemiezellstoff aus gemahlenem, gebleichtem Baumwoll-Linters, Teilchengröße <0,4 mm |
| Fichte: | Chemiezellstoff aus gemahlenem, gebleichtem Fichten-Zellstoff, Teilchengröße <0,4 mm |
| N₂: | die gesamte Reaktion wurde unter Stickstoffatmosphäre durchgeführt |
| Luft: | die gesamte Reaktion wurde unter Luftatmosphäre durchgeführt |

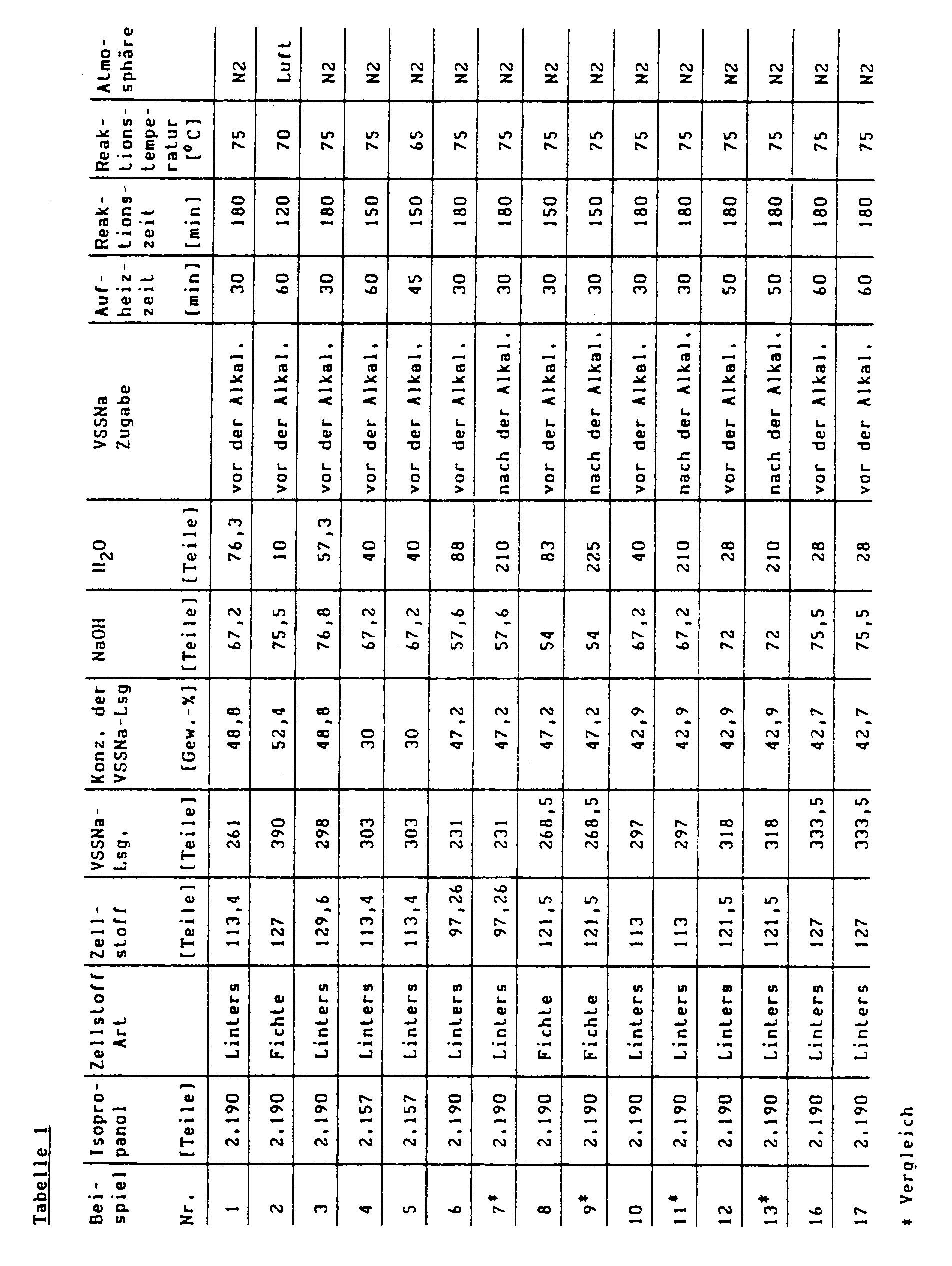

**Tabelle 2**

| Produkdaten | |
|---|---|
| Beispiele 1 bis 16, 17 | |
| Erläuterungen Tabelle 2 | |
| Trockengehalt: | Rohprodukt (lufttrocken) abzüglich Feuchte, Angabe in Prozent |
| DS: | Substitutionsgrad, Anzahl der Substituenten pro Anhydroglucose-Baustein |
| Chemikalienausbeute: | Menge des zum Produkt umgesetzten Alkylierungsmittels, Angabe in Prozent des eingesetzten vinylsulfonsauren Natriums |
| Transmission: | Anteil des durchstrahlenden Lichtes in Prozent des eintretenden Lichtes beim Durchgang durch eine mit einer 2 %igen Celluloseether-Lösung gefüllten Küvette. Optische Weglänge der Küvette = 10 mm, eingesetzte Wellenlänge λ = 550 nm |

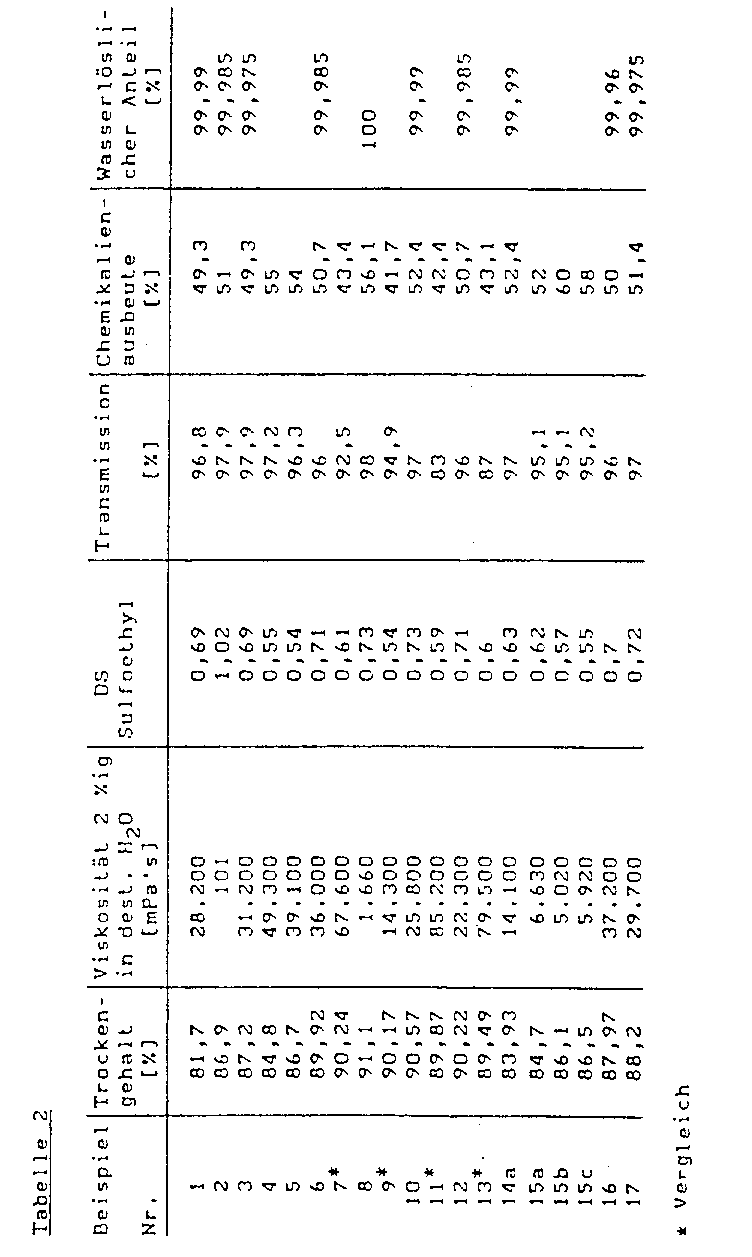

**Tabelle 3**

| Produktdaten | |
|---|---|
| Beispiele 16a und 17a | |
| Erläuterungen | |
| Trockengehalt: | Rohprodukt (lufttrocken) abzüglich Feuchte, Angabe in Prozent |
| DS: | Substitutionsgrad, Anzahl der Substituenten pro Anhydroglucose-Baustein |
| Chemikalienausbeute: | Menge des zum Produkt umgesetzten Alkylierungsmittels, Angabe in Prozent des eingesetzten vinylsulfonsauren Natriums |
| Transmission: | Anteil des durchstrahlenden Lichtes in Prozent des eintretenden Lichtes beim Durchgang durch eine mit einer 2 %igen Celluloseether-Lösung gefüllten Küvette = 10 mm, eingesetzte Wellenlänge λ = 550 nm |
| MS: | Molarer Substitutionsgrad. Anteil der Substituenten-Bausteine pro Anhydroglucose-Baustein. |

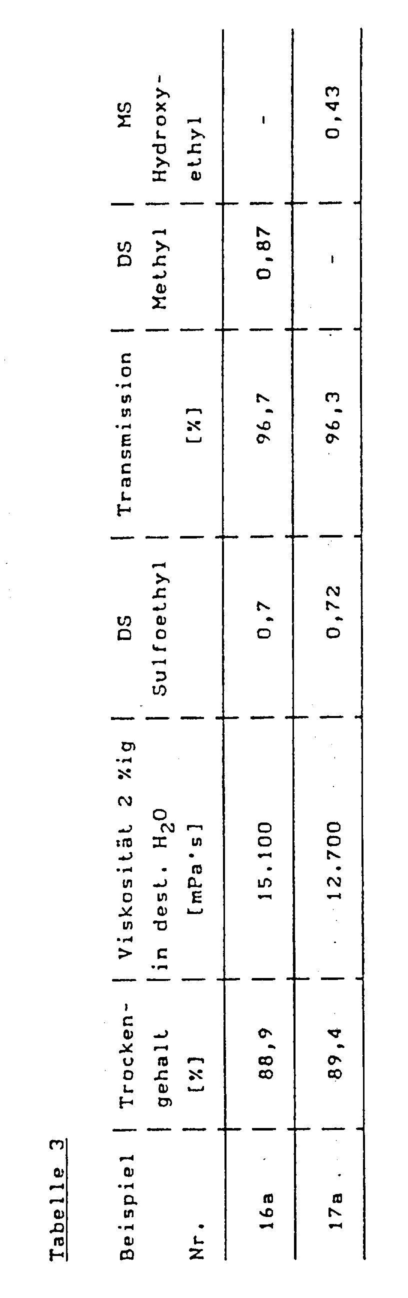

## Patentansprüche

1. Verfahren zur Herstellung einer Sulfoethylcellulose mit einem DS-Sulfoethyl von 0,5 bis 1,4, einer Viskosität von 15 bis 60.000 mPa·s (gemessen in 2 gew.-%iger wäßriger Lösung bei einem Schergefälle von γ = 2,5 sec⁻¹ bei 20°C) und einer Transmission (gemessen an einer 2 gew.-%igen wäßrigen Lösung in einer Küvette mit einer optischen Weglänge von 10 mm mit Licht der Wellenlänge 550 nm) von mehr als 95 %, durch Umsetzung von Cellulose mit Vinylsulfonsäure bzw. deren Na-Salz-als Alkylierungsmittel, dadurch gekennzeichnet, daß
1) das Alkylierungsmittel zugefügt wird zu einem in Alkohol suspendierten gemahlenen Zellstoff
2) gegebenenfalls anschließend das Alkylierungsmittel und der Zellstoff eine zeitlang vermischt werden
3) die Mischung durch Alkalizugabe alkalisiert wird
4) die Temperatur erhöht wird und
5) gegebenenfalls anschließend neutralisiert, filtriert und gewaschen wird.

2. Verfahren nach Anspruch 1, dadurch gekennzeichnet, daß als Alkylierungsmittel eine Vinylsulfonsäure verwendet wird.

3. Verfahren nach wenigstens einem der vorhergehenden Ansprüche, dadurch gekennzeichnet, daß es als Eintopfverfahren durchgeführt wird.

4. Verfahren nach wenigstens einem der vorhergehenden Ansprüche, dadurch gekennzeichnet, daß als Cellulose Chemiezellstoff, insbesondere Linters, Nadelholz-Sulfit-, Nadelholz-Sulfat-, Laubholzzellstoff, verwendet wird.

## Claims

1. A process for the production of a sulphoethyl cellulose, having a sulphoethyl DS of 0.5 to 1.4, a viscosity of 15 to 60,000 mPa.s (measured on a 2 % by weight aqueous solution at a shear rate of γ = 2.5 sec⁻¹ at 20°C) and a transmission (measured on a 2 % by weight aqueous solution in a cell having an optical path length of 10 mm with light of wavelength 550 nm) of more than 95 %, by the reaction of cellulose with vinyl sulphonic acid or the Na salt thereof as an alkylating agent, characterised in that
1) the alkylating agent is added to a ground cellulose suspended in alcohol,
2) the alkylating agent and the cellulose are then optionally mixed for a while
3) the mixture is made alkaline by the addition of alkali
4) the temperature is increased, and
5) the product is then optionally neutralised, filtered and washed.

2. A process according to claim 1, characterised in that a vinyl sulphonic acid is used as the alkylating agent.

3. A process according to at least one of the preceding claims, characterised in that it is carried out as a one-pot process.

4. A process according to at least one of the preceding claims, characterised in that chemical conversion pulp, particularly linters, softwood sulphite pulp, softwood sulphate pulp or hardwood pulp, is used as the cellulose.

## Revendications

1. Procédé de production d'une cellulose sulfoéthylée ayant une substitution moyenne par des groupes sulfoéthyle de 0,5 à 1,4, une viscosité de 15 à 60 000 mPa.s (mesurée sur une solution aqueuse à 2 % en poids pour un gradient de cisaillement y = 2,5 s⁻¹ à 20°C) et une transmission (mesurée sur une solution aqueuse à 2 % en poids dans une cuvette ayant une longueur de trajet optique de 10 mm avec de la lumière d'une longueur d'onde de 550 nm) de plus de 95 %, par réaction de cellulose avec, comme agent alkylant, l'acide vinylsulfonique ou ses sels de sodium, caractérisé en ce que
1. l'agent alkylant est ajouté à de la cellulose broyée en suspension dans de l'alcool
2. le cas échéant, l'agent alkylant et la cellulose sont ensuite mélangés pendant un laps de temps
3. le mélange est alcalinisé par addition d'un alcali
4. la température est élevée et
5. le cas échéant, on procède ensuite à une neutralisation, une filtration et un lavage.

2. Procédé suivant la revendication 1, caractérisé en ce qu'on utilise un acide vinylsulfonique comme agent alkylant.

3. Procédé suivant l'une au moins des revendications précédentes, caractérisé en ce qu'il est mis en oeuvre comme procédé en réacteur unique.

4. Procédé suivant au moins l'une des revendications précédentes, caractérisé en ce qu'on utilise comme cellulose de la pâte chimique, notamment des linters, de la pâte de conifère au sulfite, de la pâte de conifère au sulfate, de la pâte de feuillu.
